**Europäisches Patentamt**

**European Patent Office**

**Office européen des brevets**

(19)

(11) Veröffentlichungsnummer: **0 177 735**
**B1**

(12) # EUROPÄISCHE PATENTSCHRIFT

(45) Veröffentlichungstag der Patentschrift:
02.08.89

(21) Anmeldenummer: 85110815.9

(22) Anmeldetag: 28.08.85

(51) Int. Cl.⁴: **H04Q 11/04**, H04M 3/36,
H04Q 3/545

(54) Schaltungsanordnung für Fernmeldeanlagen, insbesondere Fernsprechvermittlungsanlagen, mit zentralen und/oder teilzentralen informationsverarbeitenden Schaltwerken.

(30) Priorität: 27.09.84 DE 3435549

(43) Veröffentlichungstag der Anmeldung:
16.04.86 Patentblatt 86/16

(45) Bekanntmachung des Hinweises auf die Patenterteilung:
02.08.89 Patentblatt 89/31

(84) Benannte Vertragsstaaten:
AT BE CH DE GB IT LI NL SE

(56) Entgegenhaltungen:
EP-A- 0 121 865
EP-A- 0 134 010
US-A- 4 511 762

ICC'84, LINKS FOR THE FUTURE, SCIENCE, SYSTEMS
& SERVICES FOR COMMUNICATIONS, 14.-17. Mai 1984,
Amsterdam, NL, Band 1, Seiten 34-37, IEEE/Elsevier
Science Publishers B.V., Amsterdam, NL; G.F.
CLEMENT et al.: "Stress testing large switching
systems" 000
4th INTERNATIONAL CONFERENCE ON SOFTWARE
ENGINEERING FOR TELECOMMUNICATION
SWITCHING SYSTEMS, 20.-24. Juli 1981, Coventry, GB,
Seiten 167-171; G. HARVEY et al.: "Controlling
overloads in multiprocessor systems"
10th INTERNATIONAL TELTRAFFIC CONGRESS, 9.-15.

(73) Patentinhaber: Siemens Aktiengesellschaft Berlin und
München, Wittelsbacherplatz 2, D-8000 München 2(DE)

(72) Erfinder: Daisenberger, Georg, Dipl.-Ing.,
Kärtner-Platz 3, D-8000 München 21(DE)
Erfinder: Ernst, Wolfram, Dipl.-Ing.,
Karl-Witthalm-Strasse 9, D-8000 München 70(DE)

(56) Entgegenhaltungen: (Fortsetzung)
Juni 1983, Montreal, CA, Band 1, Session 3.2, Seiten 1-8;
W.H. CAMERON et al.: "Dynamic routing for intercity
telephone networks"
ELECTRONIC SWITCHING VON "GINSEC", 1983,
Seiten 411-415, Teil IV, Kapitel 1, Absatz 8, "Traffic
supervision and load control", Elsevier Science
Publishers, Amsterdam, NL.

## Beschreibung

In den deutschen Offenlegungsschriften 3 311 866 und 3 328 572 sind Einrichtungen zur Messung der Informationsverarbeitungs-Verkehrsbelastung zentraler und dezentraler Schaltwerke, sowie zur Erkennung von Überlastsituationen und zur Abwehr solcher Überlast beschrieben. In beiden Fällen wird eine Fernsprechvermittlungsanlage beschrieben, die unter anderem ein zentrales Koppelfeld und dezentrale Anschlußgruppen umfaßt, an die Teilnehmeranschlußleitungen, Verbindungsleitungen, zum Beispiel Orts- und Fernverbindungsleitungen, und verbindungsindividuelle Schalteinrichtungen, zum Beispiel Verbindungssätze und Wahlempfangseinrichtungen, angeschlossen sind. Die Anschlußgruppen sind ihrerseits mit dem zentralen Koppelfeld verbunden. Dem zentralen Koppelfeld ist ein zentrales Schaltwerk als Zentralsteuerwerk zugeordnet. Den Anschlußgruppen sind individuell dezentrale Schaltwerke als Teilsteuerwerke zugeordnet. Die dezentralen Schaltwerke stehen mit dem zentralen Schaltwerk in einem der Abwicklung der einzelnen Vermittlungsvorgänge dienenden Austausch von Daten, zum Beispiel von Wahlinformationen, Leitungskennzeichen und Steuer- und Einstellinformationen.

In Fernsprechvermittlungsanlagen der zuvor angegebenen Art besteht ein besonderes Problem in der Frage einer optimalen Auslastung des zentralen Schaltwerkes; damit in Verbindung steht das Problem der Erkennung und Abwehr von Überbelastungen.

Es hat sich als zweckmäßig gezeigt, die zuvor genannte Abwehr von Überbelastungen bereits in der Peripherie vorzunehmen, also auf der Ebene der dezentralen Schaltwerke. Das hat einerseits den Vorteil, daß Abwehrmaßnahmen besonders wirksam sind, weil sie zu einem relativ bereits sehr frühen Zeitpunkt in den Ablauf des gesamten Vermittlungsgeschehens eingreifen können; andererseits ergibt sich der Vorteil, daß das zentrale Schaltwerk, bei dem es ganz vorrangig um eine hochgradige Ausnutzung seiner Verkehrsleistung, sowie um eine damit in ursächlichem Zusammenhang stehende Vermeidung von Überlastsituationen geht, nicht mit den Austauschvorgängen von Daten für solche Vermittlungsvorgänge belastet wird, die dann selbst von den Abwehrmaßnahmen betroffen werden, die also zur Abwehr einer Überlastsituation abgewiesen werden. Unter Abweisung ist zu verstehen, daß eine begonnene Verbindungsherstellung, die durch die Belegung einer verbindungsindividuellen Schalteinrichtung, zum Beispiel einer Eingangsleitung oder eines Verbindungssatzes oder dergleichen gekennzeichnet ist, nicht weitergeführt wird, und daß hierzu keine weiteren Schaltkennzeichen, zum Beispiel Wahlkennzeichen oder Leitungskennzeichen, von der betreffenden verbindungsindividuellen Schalteinrichtung mehr aufgenommen werden und auch keine Schaltkennzeichen über diese Schalteinrichtung mehr abgesetzt werden, und daß für den jeweils rufenden Teilnehmer ein Besetztsignal in der betreffenden verbindungsindividuellen Schalteinrichtung angelegt wird. Zur Abwehr von Informationsverarbeitungs-Verkehrsüberlastungen werden nun in den in den genannten Offenlegungsschriften beschriebenen Fernsprechvermittlungsanlagen Verbindungsherstellungsversuche zu einem bestimmten Anteil abgewiesen.

Die Erkennung von Überlastsituationen oder von dem Bevorstehen einer solchen kann in dem zentralen Schaltwerk selbst erfolgen, sowie bereits in seinem Vorfeld, das heißt in der Peripherie, also jeweils in den dezentralen Schaltwerken der Anschlußgruppen. Die genannte Offenlegungsschrift 3328572 beschreibt die Erkennung von Überlastsituationen im zentralen Schaltwerk und die meldung von Daten hierüber an die dezentralen Schaltwerke, damit in diesen die erforderlichen Abwehrmaßnahmen gestartet werden können. Die deutsche Offenlegungsschrift 3311866 beschreibt eine Erkennung von Überlastsituationen des zentralen Schaltwerkes bereits in der Peripherie, also in jedem der dezentralen Schaltwerke. Hierin geht es also um eine Früherkennung bevorstehender Überlastsituationen für das zentrale Schaltwerk und eine gleichsam vorausschauende Abwehr der zu erwartenden Informationsverarbeitungs-Verkehrsüberlastung für das zentrale Schaltwerk.

Die Abwehrmaßnahmen werden also in den beiden durch die beiden Offenlegungsschriften beschriebenen Fernsprechvermittlungsanlagen in den den Anschlußgruppen zugeordneten dezentralen Schaltwerken getroffen. Diese Abwehrmaßnahmen können darin bestehen, daß die sukzessive nacheinander eintreffenden Verbindungsherstellungsversuche in verschiedene Prioritätsklassen eingeteilt werden, und daß die Verbindungsherstellungsversuche der jeweils niedrigsten Prioritätsklasse bzw. der jeweils niedrigsten Prioritätsklassen von den Abweisungen betroffen werden, nicht aber die Verbindungsherstellungsversuche der höheren Prioritätsklassen. Hierzu können Teilnehmerleitungen sowie ankommend belegbare Verbindungsleitungen in verschiedene Prioritätsklassen eingeteilt werden. Verbindungsleitungen können eine höhere Priorität als Teilnehmerleitungen haben. Ebenso können auch Teilnehmerleitungen untereinander in unterschiedlichen Prioritätsklassen zusammengefaßt werden. Gleiches gilt für Verbindungsleitungen. Ferner kann vorgesehen werden, daß Abweisungsmaßnahmen auf Initialschaltkennzeichen beschränkt werden. Initialschaltkennzeichen bei Teilnehmeranschlußleitungen sind zum Beispiel die Anrufsignale beim Höhrerabnehmen seitens eines Teilnehmers, der jeweils mit der Herstellung einer Verbindung beginnen will. Initialschaltkennzeichen bei ankommend belegbaren Verbindungsleitungen sind die Belegungssignale bei Belegung jeweils einer ankommend belegbaren Verbindungsleitung. - Darüber hinaus ist es möglich, die Abweisungsmaßnahmen rein statistisch zu verteilen, zum Beispiel durch ein Abzählverfahren. Zum Beispiel bei einem Abweisungs-Prozentsatz von 16,6% fällt jedes sechste Initialschaltkennzeichen unter die Abweisung. Darüber hinaus besteht auch die Möglichkeit, bei einem Abweisungsverfahren die zuvor beschriebenen Prinzipien miteinander zu kombinieren. die Maßnahmen der Abwehr von Informationsverarbeitungs-Verkehrsüberlastungen kommen in Form der beschriebenen Abweisungsvorgänge also in den dezentralen Schalteinrichtungen praktisch zum Tragen. Wie bereits erläutert wurde, stammen die für diese Abweisungen maßgebenden Informationen einerseits aus dem dezentralen Schaltwerk selber und andererseits aus dem zentralen Schaltwerk. Die Abweisungen resultieren dementsprechend aus unterschiedlichen Kriterien. Sie haben eine Regelungsfunktion, deren Reaktionszeit ebenfalls ungleich ist, worauf die Herkunft des jeweils einer Abwehrmaßnahme bewirkenden Kriteriums maßgebenden Einfluß hat.

Es besteht ein Vorschlag, die Abweisungsmaßnahmen der beschriebenen Art bei Verbindungsleitungen (Orts- und Fernverbindungsleitungen) so zu modifizieren, daß eintreffende Belegungen nicht abgewiesen, sondern verhindert werden, und zwar durch eine rückwärtige Sperrung von Verbindungsleitungen nach Maßgabe jeweils gebildeter Abweisungs-Prozentsätze. Dadurch wird die Menge der über ein Verbindungsleitungsbündel eintreffenden Belegungen reduziert, wobei Belegungen von Verbindungsleitungen für Verbindungsherstellungsversuche, die wegen Informationsverarbeitungs-Verkehrsüberlastungen nicht weitergeführt werden können, von vornherein nicht stattfinden können. Dadurch können entsprechende Verkehrsströme, bzw. Anteile von diesen, in vorteilhafter Weise über andere Vermittlungsstellen abgeleitet oder umgeleitet werden.

Die Erfindung bezieht sich auf eine Schaltungsanordnung für Fernmeldevermittlungsanlagen, insbesondere Fernsprechvermittlungsanlagen, mit zentralen und dezentralen informationsverarbeitenden Schaltwerken, die eine hinsichtlich der Informationsverarbeitungskapazität begrenzte Leistungsfähigkeit aufweisen, und mit einem zentralen Koppelfeld und mit dezentralen Anschlußgruppen, denen jeweils ein dezentrales Schaltwerk zugeordnet ist, und an die verbindungsindividuelle Leitungen, z.B. Teilnehmeranschlußleitungen, Ortsverbindungsleitungen und Fernverbindungsleitungen, angeschlossen sind, und die mit dem zentralen Schaltwerk in einem der Abwicklung der einzelnen Vermittlungsvorgänge dienenden Austausch von Daten, zum Beispiel von Wahlinformationen und Steuer- und Einstellinformationen, stehen, und mt Meßeinrichtungen zur Bestimmung der jeweiligen akuten Informationsverarbeitungs-Arbeitsbelastung in einem zentralen Schltwerk sowie in jedem der dezentralen Schaltwerke und zur Erkennung von Informationsverarbeitungs-Verkehrsüberlastungen und zur Abwehr solcher Überlastungen mittels den dezentralen Anschlußgruppen einzeln zugeordneten Abweiseinrichtungen, mittels derer die Menge der einfallenden Informationsverarbeitungs-Aufträge reduziert wird, indem ein bestimmter Anteil dieser Aufträge abgewiesen wird, und mit Übertragungsschaltmitteln zur Meldung von Daten über das Abweichen der akuten Informationsverarbeitungs-Arbeitsbelastung bezüglich der Leistungsfähigkeit eines zentralen Schaltwerks und über entsprechende Informationsverarbeitungs-Verkehrsüberlastungen zu den dezentralen Schaltwerken.

Für die Erfindung besteht die Aufgabe, in einer Schaltungsanordnung der zuvor angegebenen Art für eine Abwehr von Informationsverarbeitungs-Verkehrsüberlastungen von den Schaltwerken einer Vermittlungsstelle Möglichkeiten zu schaffen, durch die die teils aus den dezentralen Schaltwerken und teils aus dem zentralen Schaltwerk stammenden Abweisungsursachen so zusammengefaßt werden, daß die von einer Vermittlungsstelle bewirkten Abweisungsmaßnahmen zusammengefaßt werden und in einer anderen Vermittlungsstelle mit einer Regelungssprünge und Regelungsschwingungen vermeidenden Wirkung, also mit einer stetigen Regelungswirkung zum Tragen kommen.

Die Erfindung löst die gestellte Aufgabe dadurch, daß in einem dezentralen Schaltwerk wenigstens zwei Abweiseinrichtungen vorgesehen sind, von denen die eine Abweisungen nach Maßgabe von in dem dezentralen Schaltwerk ermittelten Informationsverarbeitungs-Verkehrsüberlastungen und die andere Abweisungen nach Maßgabe von in dem zentralen Schaltwerk auftretenden oder bevorstehenden Informationsverarbeitungs-Verkehrsüberlastungen bewirkt, und daß in einem dezentralen Schaltwerk ein Zähler mit einem unteren und einem oberen Schwellenwert und einer dazwischen liegenden Ausgangsposition durch jede Abweisung vorwärtsgeschaltet und jede Akzeptierung eines Informationsverarbeitungs-Auftrages rückwärtsgeschaltet wird, daß dieser Zähler sowohl bei Erreichen des oberen Schwellenwertes ein Sperrungssignal und bei Erreichen des unteren Schwellenwertes ein Entsperrungssignal an eine Drosselungseinrichtung abgibt, als auch bei Erreichen jedes der beiden Schwellenwerte in seine Ausgangsposition zurückgestellt wird, und daß die Drosselungseinrichtung eines dezentralen Schaltwerkes die an die betreffende Anschlußgruppe angeschlossenen ankommend belegbaren Verbindungsleitungen in mehreren Anteilsstufen ankommend gegenüber ankommenden Belegungen sperren, indem sie bei Erhalt eines Sperrungssignales jeweils in die nächsthöhere Sperranteilsstufe bzw. eines Entsperrungssignales in die nächst niedrigere Sperranteilsstufe umgeschaltet wird, und daß mittels der Drosselungseinrichtung die ankommend belegbaren und nach Maßgabe der jeweils erreichten Sperranteilsstufe zu sperrenden Verbindungsleitungen jeweils an ihren anderen Enden als für abgehende Belegung gesperrt markiert werden, indem entweder individuell pro betreffende Verbindungsleitung Schaltkennzeichen für eine rückwärtige Sperrung oder gemeinsam pro Leitungsbündel Sperrdaten übertragen werden, die die am jeweils anderen Leitungsende für abgehende Belegungen zu sperrenden Verbindungsleitungen bezeichnen oder den Anteil von am jeweils anderen Leitungsende für abgehende Belegungen zu sperrenden Verbindungsleitungen angeben.

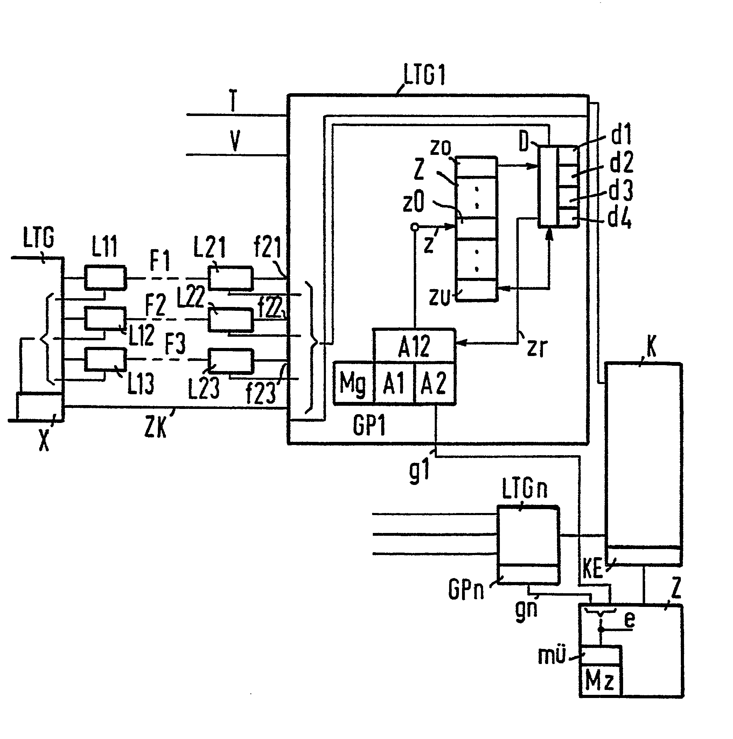

In der Zeichnung ist ein Ausführungsbeispiel der Erfindung nur in wesentlich zu ihrem Verständnis beitragenden Bestandteilen dargestellt, worauf sie jedoch keineswegs beschränkt ist.

Die Beschreibung lehnt an die in den oben genannten beiden Offenlegungsschriften bereits gegebenen Darstellungen und Beschreibungen jeweils einer Fernsprechvermittlungsanlage an. Diese Darstellungen und Beschreibungen werden im vorliegenden Falle als vorgegeben bereits vorausgesetzt.

Auch im Falle des erfindungsgemäßen Ausführungsbeispiels ist ein zentrales Koppelfeld K vorgesehen, an das Anschlußgruppen LTG1 bis LTGn in größerer Anzahl angeschlossen sind. Zur Durchschaltung der Verbindungen dient sowohl das zentrale Koppelfeld K als auch jede der Anschlußgruppen. In jeder der Anschlußgruppen sind also zusätzlich zum Koppelfeld K weitere Vermittlungsschaltmittel vorgesehen, die zur Durchschaltung der Verbindungen dienen. Sie sind hier nicht im einzelnen dargestellt.

Die Anschlußgruppen sind individuell mit je einem Teilsteuerwerk GP1 bis GPn in an sich bekannter Weise ausgestattet. Die Teilsteuerwerke stehen mit dem Zentralsteuerwerk in einem ständigen Datenaustausch über Datenverbindungen g1 bis gn. Diese Datenverbindungen mögen in einer Weise durchgeschaltet sein, wie es in der deutschen Offenlegungsschrift 31 06 903 dargestellt und beschrieben ist. Dieser Datenaustausch dient in an sich bekannter Weise zur Abwicklung der einzelnen Vermittlungsvorgänge, zum Beispiel zur Übertragung von Wahlinformationen und Steuer- und Einstellinformationen. Die Teilsteuerwerke dienen in an sich bekannter Weise zur Aufnahme von Schaltkennzeichen, also von Wahlkennzeichen und Leitungskennzeichen von den einzelnen verbindungsindividuellen Schalteinrichtungen und zur Abgabe bzw. Weitergabe von Wahlkennzeichen und Leitungskennzeichen, sowie für eine teilweise Datenvorverarbeitung. Hierüber sind weitere Angaben den bereits genannten Offenlegungsschriften zu entnehmen.

An die Anschlußgruppen sind Teilnehmerleitungen T, Ortsverbindungsleitungen V und Fernverbindungsleitungen F1 bis F3 angeschlossen. Diese und die zugehörigen Leitungsabschlußschaltungen sind verbindungsindividuelle Schalteinrichtungen. Verbindungsindividuelle Schalteinrichtungen können außerdem teilnehmerindividuelle Schalteinrichtungen sein, zum Beispiel Teilnehmeranschlußschaltungen.

Das Koppelfeld K möge in PCM-Technik aufgebaut sein. Die Verbindungsdurchschaltungen über dieses Koppelfeld erfolgen mit einer Koppelfeldeinstelleinrichtung KE. Sie wird vom Zentralsteuerwerk Z her gesteuert. Dieses Zentralsteuerwerk kann darauf beschränkt sein, die Funktionen eines koordinierenden Steuerwerkes auszuüben, das die Steuerfunktionen der Teilsteuerwerke zu koordinieren hat.

Das Zentralsteuerwerk sowie die Teilsteuerwerke weisen hinsichtlich der Informationsverarbeitungskapazität eine begrenzte Leistungsfähigkeit auf. Für die Wirtschaftlichkeit eines Zentralsteuerwerkes ist es wesentlich, daß es hochgradig ausgelastet ist. Deshalb ist es erforderlich, Informationsverarbeitungs-Verkehrsüberlastungen zu erkennen und notfalls abzuwehren. Meßeinrichtungen zur Bestimmung der jeweiligen akuten Informationsverarbeitungs-Arbeitsbelastung sind durch die genannten Offenlegungsschriften bereits sowohl für das zentralsteuerwerk Z als auch für die Teilsteuerwerke LTG1 bis LTGn beschrieben. Solche Meßeinrichtungen sind im vorliegenden Falle die Meßeinrichtungen Mz im Zentralsteuerwerk und die Meßeinrichtungen Mg in den Teilsteuerwerken. Mit Hilfe dieser Meßeinrichtungen wird also in der in den genannten Offenlegungsschriften bereits beschriebenen Weise die Informationsverarbeitungs-Arbeitsbelastung im Zentralsteuerwerk sowie in jedemder Teilsteuerwerke laufend festgestellt. Ferner werden Informationsverarbeitungs-Verkehrsüberlastungen erkannt. Die Meßeinrichtung Mg dient zur Informationsverarbeitung-Arbeitsbelastung nicht nur für das betreffende Teilsteuerwerk, sondern auch für das Zentralsteuerwerk Z. Für jedes der Teilsteuerwerke ist festgelegt, wie groß die Informationsverarbeitungs-Verkehrsbelastung sein darf, die über das betreffende Teilsteuerwerk dem Zentralsteuerwerk zugeführt werden darf. Überschreitet diese Informationsverarbeitungs-Verkehrsbelastung eine zulässige Grenze, so nimmt das betreffende Teilsteuerwerk Abweisungen vor, um das Zentralsteuerwerk vor Informationsverarbeitungs-Verkehrsüberlastungen zu schützen. Hierzu überträgt die Meßeinrichtung Mg entsprechende Daten an die Abweiseinrichtung A1, wodurch der Anteil von Informationsverarbeitungs-Aufträgen angegeben ist, die abgewiesen werden sollen. Es ist möglich, daß diese Abweisungen auf Initialschaltkennzeichen beschränkt werden. Der Unterschied zwischen Initialschaltkennzeichen und Nachfolgeschaltkennzeichen wurde bereits oben erläutert und ist auch in den beiden bereits genannten Offenlegungsschriften im einzelnen erklärt.

Wie bereits angegeben, stehen die Teilsteuerwerke mit dem Zentralsteuerwerk Z in einem laufenden Austausch von Daten zur Abwicklung der einzelnen Vermittlungsvorgänge. Dies geschieht über die Datenwege g1 bis gn und e innerhalb des Zentralsteuerwerkes Z. die gleichen Datenwege g1 bis gn dienen auch zur Meldung von Daten über das Abweichen der akuten Informationsverarbeitungs-Arbeitsbelastung bezüglich der Leistungsfähigkeit des Zentralsteuerwerks Z und über entsprechende Informationsverarbeitungs-Verkehrsüberlastungen vom Zentralsteuerwerk Z zu den Teilsteuerwerken. Im Zentralsteuerwerk Z ist eine Meßeinrichtung Mz vorgesehen, die in der in den genannten beiden deutschen Offenlegungsschriften beschriebenen Weise laufend die akute Belastungssituation des Zentralsteuerwerks ermittelt und Verkehrsüberlast- Situationen erkennt. Daten hierüber überträgt das Zentralsteuerwerk Z laufend zu den Teilsteuerwerken, und zwar in Zusammenhang mit Daten anderer Art, zum Beispiel Steuerinformationen. Übertragungsschaltmittel zur Meldung von Daten über das Abweichen der akuten Informationsverarbeitungs-Arbeitsbelastung bezüglich der Leistungsfähigkeit desZentralsteuerwerks und über entsprechende Informationsverarbeitungs-Verkehrsüberlastungen sind die Übertragungsschaltmittel mü. Diese die Verkehrsbelastung und Verkehrsüberlastungen des Zentralsteuerwerks betreffenden Daten werden in den Teilsteuerwerken jeweils einer zweiten Abweiseinrichtung A2 zugeführt. Diese Daten geben an, welcher Anteil von Informationsverarbeitungs-Aufträgen in der bereits beschriebenen Weise abzuwweisen ist.

In jedem der Teilsteuerwerke sind also wenigstens zwei Abweicheinrichtungen A1 und A2 vorgesehen. Die Abweiseinrichtung A1 empfängt ihre Informationen über vorzunehmende Abweisungen von Informationsverarbeitungs-Aufträgen von der Meßeinrichtung Mg des betreffenden Teilsteuerwerks. Die Abweiseinrichtung A2 empfängt ihre diesbezüglichen Informationen von der betreffenden Meßeinrichtung Mz des Zentralsteuerwerks Z über die Übertragungsschaltmittel mü. Die Meßeinrichtung A1 bewirkt nach Maßgabe von in dem Teilsteuerwerk GP1 ermittelten Informationsverarbeitungs-Verkehrsüberlastungen entsprechende Abweisungen. Die Abweiseinrichtung A2 bewirkt nach Maßgabe von in dem Zentralsteuerwerk Z auftretenden oder bevorstehenden Informationsverarbeitungs- Verkehrsüberlastungen entsprechende Abweisungen. Es kann sich also immer um beeits gegebene Informationsverarbeitungs-Verkehrsüberlastungen handeln oder auch um bevorstehende und bereits erkennbare.

In welcher Weise Abweisungen vorgenommen werden, wurde bereits einleitend ausführlich erläutert. Dies kann nach einer statistischen Verteilung im Abzählverfahren oder unter Berücksichtigung von vorgegebenen Prioritäten unter den betreffenden Leitungen (Teilnehmerleitungen und Verbindungsleitungen) und in Kombination dieser beiden Prinzipien erfolgen.

Die beiden genannten Abweiseinrichtungen A1 und A2 bewirken also Abweisungen, und zwar nach Maßgabe einerseits von in einem Teilsteuerwerk ermittelten Informationsverarbeitungs-Verkehrsüberlastungen und andererseits im Zentralsteuerwerk ermittelten Informationsverarbeitungs-Verkehrsüberlastungen. In welcher Weise die Abweisungen im einzelnen realisiert werden, ist bereits in den genannten beiden Offenlegungsschriften im einzelnen erläutert.

In dem Teilsteuerwerk LTG1 ist ebenso wie in den anderen Teilsteuerwerken ein Zähler Z mit einem unteren und einem oberen Schwellenwert und einer dazwischenliegenden Ausgangsposition vorgesehen. Der Zähler Z weit unter anderem in symbolischem Sinne einen Zeiger z auf. Dieser Zeiger kann auf verschiedene der Zählglieder zo bis zu des Zählers Z eingestellt sein. Das Zählglied zO entspricht einem oberen Schwellenwert und das Zählglied zu einem unteren Schwellenwert des Zählers Z. Das dazwischenliegende Zählglied zo entspricht einer dazwischenliegenden Ausgangsposition des Zählers Z.

Bei jeder erfolgten Abweisung wird der Zähler mit seinem Zeiger z in Richtung zu dem seinem oberen Schwellenwert entsprechenden Zählglied zo vorwärtsgeschaltet. Umgekehrt wird der Zähler durch jede Akzeptierung eines Informationsverarbeitungs-Auftrages rückwärtsgeschaltet, also in der Richtung zu seinem dem unteren Schwellenwert entsprechenden Zählglied zu. Die Stellung des Zählers möge jeweils durch die Stellung seines Zeigers z angegeben sein. Dieser Zeiger markiert jeweils eines der Zählglieder. Die Vorwärtsschaltung und die Rückwärtsschaltung des Zählers durch jede Abweisung bzw. jede Akzeptierung eines Informationsverarbeitungs-Auftrages erfolgt mit ungleicher Anzahl von Zählerschritten. So kann zum Beispiel vorgesehen sein, daß der Zähler Z mit jeder Abweisung um drei Zählerschritte vorwärtsgeschaltet wird, dagegen mit jeder Akzeptierung nur um einen Zählerschritt rückwärtsgeschaltet wird. Dadurch kann bewirkt werden, daß die weiter unten noch im einzelnen beschriebene Auswirkung der Vorwärtsschaltung und Rückwärtsschaltung des Zählers unterschiedlich ist im Hinblick auf Abweisungen und Akzeptierungen.

Bei Erreichen des oberen Schwellenwertes im Zähler Z, wenn also sein Zeiger z das dem oberen Schwellenwert entsprechende Zählglied zo erreicht hat, gibt der Zähler Z ein Sperrungssignal an eine Drosselungseinrichtung D ab. Umgekehrt gibt der Zähler Z ein Entsperrungssignal zur Drosselungseinrichtung D hin ab, wenn er den unteren Schwellenwert erreicht, wenn also sein Zeiger das dem unteren Schwellenwert entsprechende Zählglied zu erreicht. Außerdem wird der Zähler Z sowohl beim Erreichen des oberen Schwellenwertes als auch beim Erreichen des unteren Schwellenwertes in seiner Ausgangsposition zurückgestellt. Hierzu dient ein Rückstellstromkreis zr. Der Ausgangsposition entspricht das Zählglied zo.

Die Drosselungseinrichtung D enthält Speicherglieder d1 bis d4, die unterschiedlichen Anteilsstufen zugeordnet sind. Diese Anteilsstufen beziehen sich auf Anteile von ankommenden Belegungen bzw. ankommend belegbaren Verbindungsleitungen, die gegenüber ankommenden Belegungen gesperrt sein sollen. Ist keines der Speicherglieder d1 bis d4 markiert, so möge der Anteil von zu sperrenden ankommend belegbaren Leitungen gleich null sein. Ist dagegen das Speicherglied d1 markiert, so möge der Anteil von zu sperrenden ankommend belegbaren Leitungen 10% betragen. Die verschiedenen Speicherglieder d1 bis d4 mögen verschiedenen gewählten Prozentsätzen in diesem Sinne entsprechen. Bei Erhalt eines Sperrungssignales möge die Drosselungseinrichtung jeweils in die nächst höhere Sperranteilsstufe umgeschaltet werden, was praktisch bedeutet, daß anstelle des Speichergliedes d1 das Speicherglied d2 markiert wird, wodurch die Anteilsstufe zum Beispiel von 10% auf 20% heraufgesetzt sein möge. Bei Erhalt eines Entsperrungssignales wird die Drosselungseinrichtung D dagegen jeweils in die nächstniedrigere Sperranteilsstufe umgeschaltet, wobei also anstelle des Speichergliedes d2 das Speicherglied d1 markiert werden könnte.

Mit Hilfe der Drosselungseinrichtung D wird also registriert, daß gegenüber einer gewissen Anzahl von akzeptierten Informationsverarbeitungs-Aufträgen eine Anzahl von Abweisungen stattgefunden hat. Ebenso wird mit Hilfe der Drosselungseinrichtung D registriert, wenn die Anzahl von akzeptierten Aufträgen entsprechend größer gewesen ist als die Anzahl von Abweisungen. Hierbei wirkt sich in der angegebenen Weise die bereits genannte Tatsache aus, daß Abweisungen und Akzeptierungen den Zähler Z nicht nur hinsichtlich der Fortschaltungsrichtung sondern auch hinsichtlich der Anzahl der Zählerschritte pro Abweisung bzw. Akzeptierung unterschiedlich beeinflussen.

Mittels der Drosselungseinrichtung wird nun gesteuert, welcher Anteil der ankommend belegbaren und nach Maßgabe der jeweils erreichten Sperranteilsstufe für ankommende Belegungen vorläufig unzugänglich zu machenden Verbindungsleitungen dementsprechend zu sperren sind. Diese Verbindungsleitungen werden jeweils an ihren anderen Enden als für abgehende Belegung gesperrt markiert. Die Fernverbindungsleitungen F1 bis F3 sind über Leitungsabschlußschaltungen L11 bis L23 jeweils mit ihren beiden Leitungsenden an Anschlußgruppen LTG1 und LTG zweier verschiedener Vermittlungsstellen angeschlossen. Die Leitungsabschlußschaltungen L21 bis L23 sind bei f21 bis f23 an die Anschlußgruppe LTG1 in an sich bekannter Weise angeschlossen. Wie außerdem aus der Zeichnung ersichtlich ist, führt aus jeder Leitungsabschlußschaltung L21 bis L23 unten heraus ein Steuerstromkreis, der ebenfalls zur Anschlußgruppe LTG1 führt, und zwar zu deren Teilsteuerwerk GP1. Diese Steuerstromkreise sind mit der Drosselungseinrichtung D in der dargestellten Weise verbunden. Die Drosselungseinrichtung vermag nun über diese Steuerstromkreise entsprechende Steuersignale zu den Leitungsabschlußschaltungen L21 bis L23 zu übertragen und auf diese Weise bewirken, daß ein bestimmter Anteil dieser Leitungsabschlußschaltungen jeweils ein Signal für rückwärtige Sperrung erhält. Gemäß der jeweils erreichten Sperranteilstufe wird also ein Teil der Verbindungsleitungen eines Verbindungsleitungsbündels als gesperrt markiert. Mittels der Drosselungseinrichtung werden also die ankommend belegbaren und nach Maßgabe der jeweils erreichten Sperranteilsstufe zu sperrenden Verbindungsleitungen eines Bündels jeweils an ihren anderen Enden als für abgehende Belegung gesperrt markiert. Hierzu wird das Kriterium "rückwärtige Sperrung" in an sich bekannter Weise über die jeweilige Fernverbindungsleitung, zum Beispiel F3 zu deren anderen Ende übertragen und in der hier vorgesehenen Leitungsabschlußschaltung, zum Beispiel L13 aufgenommen. Es bewirkt hier, daß die betreffende Fernverbindungsleitung F3 an diesem anderen Leitungsende als für abgehende Belegung gespert markiert ist.

Es ist möglich, daß in der beschriebenen Weise individuell pro betreffende Verbindungsleitung Schaltkennzeichen für eine rückwärtige Sperrung übertragen werden. Bekannt ist aber auch das Prinzip des zentralen Zeichenkanals für ein Leitungsbündel. Ein zentraler Zeichenkanal ist in der Zeichnung mit ZK dargestellt. Über diesen zentralen Zeichenkanal können gemeinsam pro Leitungsbündel Sperrdaten mittels der Drosselungseinrichtung nach Maßgabe der jeweils erreichten Sperranteilsstufe übertragen werden, die am jeweils anderen Leitungsende die für abgehende Belegungen jeweils zu sperrenden Verbindungsleitungen bezeichnen, zum Beispiel die Fernverbindungsleitung F3. Dies möge mit einer entsprechenden Steuerschaltung x in der anderen Vermittlungsanlage bewerkstelligt werden.

Darüber hinaus ist es auch möglich, mit Hilfe dieser Sperrdaten den zahlenmäßigen Anteil von am jeweils anderen Leitungsende für abgehende Belegungen zu sperrenden Verbindungsleitungen anzugeben. Diese Sperrdaten mögen zu einer Wegesuch- und Auswahleinrichtung der Vermittlungsanlage übertragen werden, zu der die Anschlußgruppe LTG gehört, die also am jeweils anderen Leitungsende vorhanden ist. In dieser Wegesuch- und Auswahleinrichtung möge mit Hilfe dieser übertragenen Sperrdaten ein entsprechender Anteil des betreffenden Leitungsbündels von Fernverbindungsleitungen, zum Beispiel f1, f3, als nicht belegbar markiert sein. In diesem Falle ist es also unerheblich, welche einzelnen Leitungen nicht belegbar sind. Vielmehr ist in der betreffenden Wegesuch- und Auswahleinrichtung in der anderen Vermittlungsstelle gespeichert, in welchem Ausmaß die Verfügbarkeit über abgehende Verbindungsleitungen des betreffenden Leitungsbündels eingeschränkt ist.

Ergänzend sei nochmals auf die beiden Abweiseinrichtungen A1 und A2 eingegangen. Jede dieser Abweiseinrichtungen kann in der jeweils ihr gemäßen Weise Abweisungen vornehmen. Darüber hinaus kann aber auch den beiden Abweiseinrichtungen eine gemeinsame Abzähleinrichtung A12 zugeordnet sein, die von beiden Abweiseinrichtungen Abweisungsraten-Angaben erhält und diese kombiniert und für die beiden Abweiseinrichtungen gemeinsam die Abweisungen bzw. Akzeptierungen durchführt.

## Patentansprüche

1. Schaltungsanordnung für Fernmeldevermittlungsanlagen, insbesondere Fernsprechvermittlungsanlagen, mit zentralen und dezentralen informationsverarbeitenden Schaltwerken, die eine hinsichtlich der Informationsverarbeitungskapazität begrenzte Leistungsfähigkeit aufweisen, und mit einem zentralen Koppelfeld (K) und mit dezentralen Anschlußgruppen (LTG1, LTGn), denen jeweils ein dezentrales Schaltwerk (GP1, GPn) zugeordnet ist, und an die verbindungsindividuelle Leitungen, z.B. Teilnehmeranschlußleitungen (T), Ortsverbindungsleitungen (V) und Fernverbindungsleitungen (F), angeschlossen sind, und die mit dem zentralen Schaltwerk (Z) in einem der Abwicklung der einzelnen Vermittlungsvorgänge dienenden Austausch von Daten, zum Beispiel von Wahlinformationen und Steuer- und Einstellinformationen, stehen, und mit Meßeinrichtungen (Mg, Mz) zur Bestimmung der jeweiligen akuten Informationsverarbeitungs-Arbeitsbelastung in einem zentralen Schaltwerk sowie in jedem der dezentralen Schaltwerke und zur Erkennung von Informationsverarbeitungs-Verkehrsüberlastungen und zur Abwehr solcher Überlastungen mittels den dezentralen Anschlußgruppen einzeln zugeordneten Abweiseinrichtungen (A), mittels derer die Menge der einfallenden Informationsverarbeitungs- Aufträge reduziert wird, indem ein bestimmter Anteil dieser Aufträge abgewiesen wird, und mit Übertragungsschaltmitteln zur Meldung von Daten über das Abweichen der akuten Informationsverarbeitungs-Arbeitsbelastung bezüglich der Leistungsfähigkeit eines zentralen Schaltwerks und über entsprechende Informationsverarbeitungs-Verkehrsüberlastungen zu den dezentralen Schaltwerken, **dadurch gekennzeichnet,** daß in einem dezentralen Schaltwerk wenigstens zwei Abweiseinrichtungen (A1, A2, A12) vorgesehen sind, von denen die eine Abweisungen nach Maßgabe von in dem dezentralen Schaltwerk er mittelten Informationsverarbeitungs-Verkehrsüberlastungen und die andere Abweisungen nach Maßgabe von in dem zentralen Schaltwerk auftretenden oder bevorstehenden Informationsverarbeitungs-Verkehrsüberlastungen bewirkt, und daß in einem dezentralen Schaltwerk ein Zähler (Z) mit einem unteren und einem oberen Schwellenwert und einer dazwischen liegenden Ausgangsposition durch jede Abweisung vorwärtsgeschaltet und jede Akzeptierung eines Informationsverarbeitungs-Auftrages rückwärtsgeschaltet wird, daß dieser Zähler sowohl bei Erreichen des oberen Schwellenwertes ein Sperrungssignal und bei Erreichen des unteren Schwellenwertes ein Entsperrungssignal an eine Drosselungseinrichtung (D) abgibt, als auch bei Erreichen jedes der beiden Schwellenwerte in seine Ausgangsposition zurückgestellt wird, und daß die Drosselungseinrichtung eines dezentralen Schaltwerkes die an die betreffende Anschlußgruppe angeschlossenen ankommend belegbaren Verbindungsleitungen in mehreren Anteilsstufen gegenüber ankommenden Belegungen sperren indem sie bei Erhalt eines Sperrungssignales jeweils in die nächsthöhere Sperranteilsstufe bzw. eines Entsperrungssignales in die nächst niedrigere Sperranteilsstufe umgeschaltet wird, und daß mittels der Drosselungseinrichtung die ankommend belegbaren und nach Maßgabe der jeweils erreichten Sperranteilsstufe zu sperrenden Verbindungsleitungen jeweils an ihren anderen Enden als für abgehende Belegung gesperrt markiert werden, indem entweder individuell pro betreffende Verbindungsleitung Schaltkennzeichen für eine rückwärtige Sperrung oder gemeinsam pro Leitungsbündel Sperrdaten übertragen werden, die die am jeweils anderen Leitungsende für abgehende Belegungen zu sperrenden Verbindungsleitungen bezeichnen oder den Anteil von am jeweils anderen Leitungsende für abgehende Belegungen zu sperrenden Verbindungsleitungen angeben.

2. Schaltungsanordnung nach Anspruch 1, **dadurch gekennzeichnet,** daß die Vorwärtsschaltung und die Rückwärtsschaltung des Zählers durch jede Abweisung bzw. jede Akzeptierung mit ungleicher Anzahl von Zählerschritten erfolgt.

3. Schaltungsanordnung nach Anspruch 1, **dadurch gekennzeichnet,** daß eine den Abweiseinrichtungen gemeinsame Abzähleinrichtung von beiden Abweisungsraten Angaben erhält und für beide die Abweisungen bzw. Akzeptierungen durchführt.

4. Schaltungsanordnung nach Anspruch 1, **dadurch gekennzeichnet,** daß die den Anteil von zu sperrenden Verbindungsleitungen angebenden Sperrdaten zu einer Wegesuch- und Auswahleinrichtung einer Vermittlungsanlage am jeweils anderen Leitungsende übertragen wird, und daß in dieser Einrichtung ein entsprechender Anteil des betreffenden Leitungsbündels als nicht belegbar markiert wird.

**Claims**

1. Circuit arrangement for telecommunication installations, especially for telephone exchanges, with centralized and/or decentralized information-processing devices with a limited performance in terms of information-processing capacity, and with a central switching matrix (K) and with decentralized termination groups (LTG1, LTGn), to which in each case a decentralized device (GP1, GPn) is assigned, and to which connection-specific lines, e.g. subscriber lines (T), local junction lines (V) and long-distance junction lines (F), are connected, and which exchange data, for example dialling information and control and setting information, with the central device (Z) in order to process the individual switching operations and with measuring devices (Mg, Mz) for determining the respective acute information-processing workload in a central device as well as in each of the decentralized devices and for detecting information-processing traffic overloading and for averting such overloading by means of rejection devices (A) assigned individually to the decentralized termination groups, by means of which rejection devices the volume of information-processing requests occurring is reduced, in that a stipulated proportion of these requests is rejected, and with transmission switching means for signalling data about the deviation of the acute information-processing workload with respect to the capacity of a central device and about corresponding information-processing traffic overloading to the decentralized devices, characterized in that there are provided in a decentralized device at least two rejection devices (A1, A2, A12), of which one effects rejections according to the information-processing traffic overloading determined in the decentralized device and the other effects rejections according to the information-processing traffic overloading occurring or imminent in the central device, and in that, in a decentralized device, a counter (Z) with a lower and an upper threshold value and an intermediate starting position is switched forward by each rejection and switched backward by each acceptance of an informationprocessing request, in that this counter not only outputs a blocking signal when the upper threshold value is reached and an unblocking signal when the lower threshold value is reached to a choke device (D), but is also reset to its starting position when either of the two threshold values is reached, and in that the choke device of a decentralized device blocks the seizable incoming junction lines connected to the respective termination group in several proportion levels with respect to incoming seizures, in that it is switched over in each case into the next-higher blocking proportion level when a blocking signal is received or into the next lower blocking proportion level when an unblocking signal is received, and in that by means of the choke device the seizable incoming junction lines which are to be blocked according to the blocking proportion level reached in each case are marked in each case at their other ends as blocked for outgoing seizure, in that either switching signals for a backward blocking are transmitted individually per respective junction line or blocking data are transmitted jointly per line group which mark the junction lines to be blocked in each case at the other line end for outgoing seizures or specify the proportion of junction lines to be blocked in each case at the other line end for outgoing seizures.

2. Circuit arrangement according to Claim 1, characterized in that the forward switching and the backward switching of the counter by each rejection and each acceptance respectively is effected with an unequal number of counting steps.

3. Circuit arrangement according to Claim 1, characterized in that a counting device common to the rejection devices receives information from both rejection rates and carries out the rejections or acceptances for both.

4. Circuit arrangement according to Claim 1, characterized in that the blocking data specifying the proportion of junction lines to be blocked are transmitted to a routing and selection device (X) of an exchange at the other end of the line in each case, and in that in this device a corresponding proportion of the respective line group is marked as not seizable.

## Revendications

1. Montage pour des installations de télécommunications, notamment des centraux téléphoniques, comprenant des unités centrales de commutation et des unités décentralisées de commutation, qui traitent des informations et possèdent une capacité potentielle limitée de traitement d'informations, un champ de couplage central (K) et des groupes de raccordement décentralisés (LTG1, LTGn), auxquels sont associées des unités respectives décentralisées de commutation (GP1, GPn) et auxquelles sont raccordées des lignes prévues pour chaque liaison, par exemple des lignes d'abonnés (A), des lignes urbaines (V) et des lignes interurbaines (F), et qui sont reliées à l'unité centrale de commutation (Z) pour réaliser un échange de données, par exemple d'informations de sélection et d'informations de commande et de réglage, utilisées pour le déroulement des processus individuels de commutation, et des dispositifs de mesure (Mg, Mz) servant à déterminer la charge respective précise de travail de traitement d'informations dans une unité centrale de commutation ainsi que dans chacune des unités décentralisées de commutation et à identifier des surcharges en trafic de traitement d'informations et à lutter contre de telles surcharges, à l'aide de dispositifs de rejet (A), qui sont associés individuellement aux groupes décentralisés de raccordement et à l'aide desquels la quantité des ordres arrivants de traitement d'informations est réduite, par le fait qu'une partie déterminée de ces ordres est rejetée, et comportant des moyens de commutation de transmission servant à signaler, aux unités décentralisées de commutation, des données concernant le rejet de la charge précise de travail de traitement d'informations, en rapport avec la capacité potentielle de l'unité centrale de commutation, et concernant des surcharges correspondantes en trafic de traitement d'informations, caractérisé par le fait que dans une unité décentralisée de commutation il est prévu au moins deux dispositifs de rejet (A1, A2, A12), dont l'un réalise des rejets en fonction de surcharges en trafic de traitement d'informations déterminées dans l'unité décentralisée de commutation et dont l'autre réalise des rejets en fonction de surcharges en trafic de traitement d'informations, apparaissantes ou déjà présentes dans l'unité centrale de commutation, et que, dans une unité décentralisée de commutation, un compteur (Z) possédant une valeur de seuil inférieure et une valeur de seuil supérieure et une position de sortie, se situant entre ces valeurs, est avancé lors de chaque rejet et est rétrogradé lors de chaque acceptation d'un ordre de traitement d'informations, et que ce compteur envoie à un dispositif de limitation (D) un signal de blocage dans le cas où la valeur de seuil supérieure est atteinte et un signal de libération lorsque la valeur de seuil inférieure est atteinte, et est rétrogradé dans sa position initiale lorsque chacune des deux valeurs de seuil est atteinte, et que le dispositif de limitation d'une unité décentralisée de commutation bloque les lignes de jonction qui sont raccordées au groupe de raccordement considéré et peuvent être occupées côté arrivée, selon plusieurs niveaux de pourcentages de blocage, vis-à-vis d'occupations d'arrivée, par le fait que, lorsqu'il reçoit un signal de blocage, il est commuté sur le niveau immédiatement supérieur de pourcentage de blocage ou, lorsqu'il reçoit un signal de libération, il est commuté sur le niveau immédiatement inférieur de pourcentage de blocage, et que les lignes de jonction, qui peuvent être occupées côté arrivée et doivent être bloquées en fonction du niveau respectivement atteint du pourcentage de blocage, sont signalées, au moyen du dispositif de commutation, respectivement au niveau de leurs autres extrémités, comme étant bloquées pour une occupation de départ, par le fait que des indicatifs de commutation pour un blocage rétrograde sont transmis individuellement pour chaque ligne de jonction considérée, ou bien qu'il se produit, en commun pour chaque faisceau de lignes, la transmission de données de blocage, qui désignent les lignes de jonction, qui doivent être bloquées, à l'autre extrémité respective de la ligne, pour des occupations de départ, ou indiquent le pourcentage de lignes de jonction devant être bloquées à l'autre extrémité de la ligne pour des occupations de départ.

2. Montage suivant la revendication 1, caractérisé par le fait que le comptage progressif et le comptage rétrograde du compteur sont exécutés, sous l'effet de chaque rejet ou de chaque acceptation, avec des nombres différents de pas de comptage.

3. Montage suivant la revendication 1, caractérisé par le fait qu'un dispositif de comptage, commun aux dispositifs de rejet reçoit des indications concernant les deux taux de rejet et exécute, pour les deux dispositifs, les rejets ou les acceptations.

4. Montage suivant la revendication 1, caractérisé par le fait que les données de blocage, qui indiquent le pourcentage de lignes de jonction devant être bloquées, sont transmises à un dispositif (7) de recherche de voies d'acheminement et de sélection d'une installation de commutation présente à l'autre extrémité respective de la ligne, et que, dans ce dispositif, une partie correspondante du faisceau considéré de lignes est marquée comme concernant des lignes ne pouvant pas être occupées.